# EUROPÄISCHE PATENTSCHRIFT

(11) **EP 3 560 150 B1**
(45) Veröffentlichungstag und Bekanntmachung des Hinweises auf die Patenterteilung: **28.05.2025**
(21) Anmeldenummer: 17811479.9
(22) Anmeldetag: 22.11.2017
(51) Int. Cl.: H04L 12/40

(54) **ÜBERWACHUNG DER DATENÜBERTRAGUNG IN EINEM CLIENT-SERVER-BASIERTEN GERÄTEZUGRIFFSSYSTEM**
MONITORING OF THE DATA TRANSMISSION IN A CLIENT/SERVER-BASED DEVICE ACCESS SYSTEM
SURVEILLANCE DE LA TRANSMISSION DE DONNÉES DANS UN SYSTÈME D'ACCÈS À DES APPAREILS SUR UNE BASE CLIENT SERVEUR

(30) Priorität: 21.12.2016 DE 102016125171
(43) Veröffentlichungstag der Anmeldung: 30.10.2019
(73) Patentinhaber: Endress+Hauser Process Solutions AG, 4153 Reinach (CH)
(72) Erfinder: SOTRIFFER, Ingomar, 79194 Gundelfingen (DE); MAYER, Michael, 4104 Oberwil (CH); LUBER, Werner, 4123 Allschwil (CH); SUTTER, Mike, 79692 Kleines Wiesental (DE)
(74) Vertreter: Endress + Hauser Group Services (Deutschland) AG+Co. KG
(86) Internationale Anmeldenummer: PCT/EP2017/080071
(87) Internationale Veröffentlichungsnummer: WO 2018/114194

(56) Entgegenhaltungen:
- EP-A1- 3 018 635
- DE-A1- 102010 040 055
- US-A1- 2015 172 306
- ANONYMOUS: "Firewall - Wikipedia - Version vom 20. November 2016", 20 November 2016 (2016-11-20), XP055922062, Retrieved from the Internet <URL:https://de.wikipedia.org/w/index.php?title=Firewall&oldid=159901413> [retrieved on 20220517]

## Beschreibung

Die Erfindung betrifft eine Gerätezugriffseinrichtung für ein Client-Server-System, das einen Server und einen Client umfasst, wobei mit der Gerätezugriffseinrichtung auf Komponenten eines Feldbussystems zugegriffen werden kann. Außerdem betrifft die Erfindung einen Server, der mit einem Feldbusnetzwerk verbindbar ist, und ein System der Automatisierungstechnik, das einen Server und einen Client umfasst. Darüber hinaus betrifft die Erfindung ein Verfahren zur Überwachung des Datenverkehrs zwischen einem Server und einem Client eines Client-Server-Systems, über das auf Komponenten eines Feldbusnetzwerks zugegriffen werden kann.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Die Parametrierung, Konfiguration und Zustandsüberwachung der Feldgeräte eines Feldbusnetzwerks erfolgt in der Regel mittels einer Gerätezugriffeinrichtung. Die Gerätezugriffseinrichtung umfasst eine Rahmenapplikation, in die eine Mehrzahl von Treibern eingebunden ist. Mittels der Treiber kann auf die Komponenten des Feldbusnetzwerks zugegriffen werden. Bei der Implementierung von Gerätezugriffseinheiten, mit denen auf Komponenten eines Feldgerätenetzwerks zugegriffen werden kann, besteht vielfach das Bedürfnis, die Gerätezugriffseinheit mittels einer Client-Server-Struktur zu realisieren, denn auf diese Weise wird beispielsweise eine Anbindung von mobilen Geräten an einen zentralen Server ermöglicht. Der Benutzer kann dann beispielsweise vor Ort die Feldgeräte und andere Komponenten eines Feldbusnetzwerks parametrieren und konfigurieren. Allerdings kommt es bei derartigen Systemen immer wieder zu Fehlern in der Datenübertragung zwischen Server und Client. Beispielsweise werden neu aufgebaute Datenverbindungen nicht korrekt beendet, so dass immer mehr Systemressourcen belegt werden, was nach einiger Zeit zu Systemstörungen führt.

Die DE 10 2010 040 055 A1 offenbart ein System, welches dazu ausgelegt ist, allgemeine Fehlerzustände in der Kommunikation zwischen einem Kommunikationstreiber und einem Gerätetreiber oder einem Gateway-Treiber zu detektieren, melden und in bestimmten Fällen auch aufzulösen.

Es ist Aufgabe der Erfindung, eine zuverlässigere Anbindung eines Clients an den Server in einem Client-Server-basierten System für den Zugriff auf Komponenten eines Feldbusnetzwerks bereitzustellen.

Gelöst wird diese Aufgabe durch die in den Ansprüchen 1, 11, 12 und 13 angegebenen Merkmale.

Vorteilhafte Weiterentwicklungen der Erfindung sind in den Unteransprüchen angegeben.

Nachfolgend ist die Erfindung anhand von in der Zeichnung dargestellten Ausführungsbeispielen näher erläutert. Es zeigen:
Fig. 1 die Struktur eines Feldbusnetzwerks und einer zugehörigen Gerätezugriffssoftware mit darin eingebundenen Treibern;
Fig. 2 eine Datenübertragung in beiden Richtungen zwischen einem Client, einem Server und einem Feldgerät;
Fig. 3 eine detaillierte Darstellung der Anbindung von zwei Clients an einen Server, wobei der Datenaustausch über einen Kommunikationsproxy abgewickelt wird; und

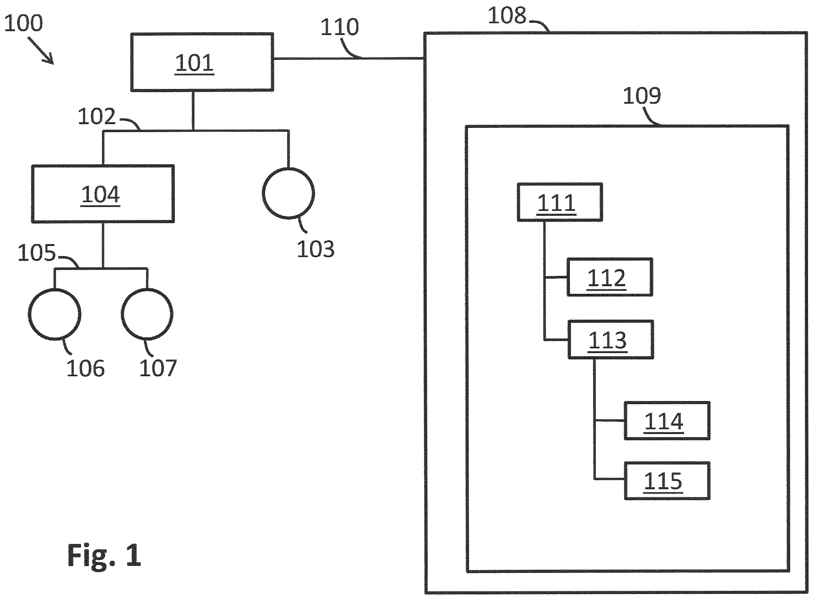

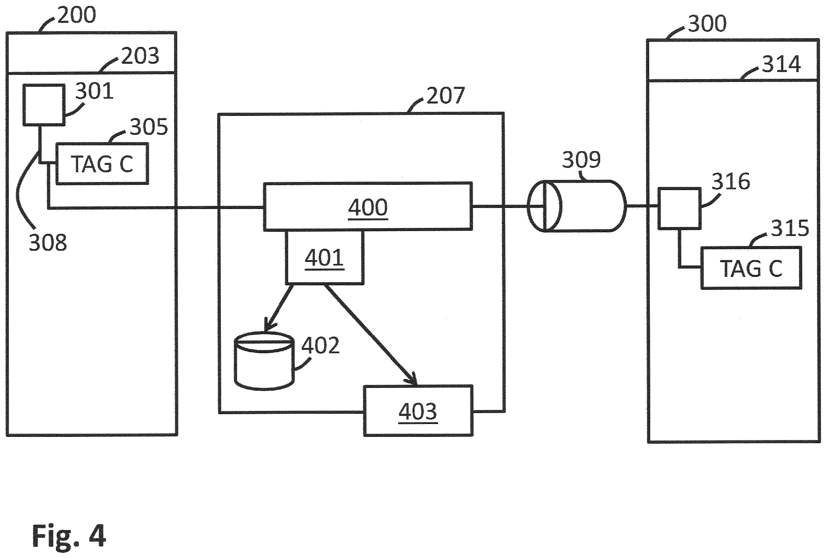

Fig. 4 die Überprüfung der Datenübertragung durch den Kommunikationsproxy, der die Datenübertragung zwischen Client und Server mit einem vorgegebenen Regelwerk abgleicht. Figur 1 zeigt ein Feldbusnetzwerk 100, das eine Mehrzahl von Feldgeräten und Gatewaygeräten umfasst. Auf der obersten Hierarchieebene des Feldbusnetzwerks 100 befindet sich ein Feldzugangsgerät 101. Das Feldzugangsgerät 101 ist über ein Profibussegment 102 mit einem Feldgerät 103 und einem Gatewaygerät 104 verbunden. Über das Gatewaygerät 104 ist das Profibussegment 102 mit einem HART-Segment 105 gekoppelt, wobei das Gatewaygerät 104 dazu ausgelegt ist, den Datenverkehr aus dem Protokoll Profibus in das Protokoll HART umzusetzen und umgekehrt. An das HART-Segment 105 sind die beiden HART-Feldgeräte 106 und 107 angeschlossen.

Die Parametrierung, Konfiguration und Zustandsüberwachung der Feldgeräte eines Feldbusnetzwerks erfolgt mittels einer auf einem Host 108 installierten Rahmenapplikation 109. Der Host 108 ist über eine Ethernetverbindung 110 mit dem Feldbusnetzwerk 100 verbunden. Über die Rahmenapplikation 109 kann auf die verschiedeneren Komponenten des Feldbusnetzwerks 100 zugegriffen werden. Insbesondere können von der Rahmenapplikation 109 aus die Parameter der verschiedenen Komponenten des Feldbusnetzwerks 100 ausgelesen, dargestellt, und verändert werden. Darüber hinaus ermöglicht die Rahmenapplikation 109 eine Zustandsüberwachung (Condition Monitoring) der Komponenten des Feldbusnetzwerks 110. Der für diese Aufgaben erforderliche Datenaustausch wird in der Regel über den sogenannten azyklischen Datenverkehr abgewickelt.

Um die verschiedenen Komponenten des Feldbusnetzwerks 100 korrekt ansprechen zu können, benötigt die Rahmenapplikation 109 Informationen über die Eigenschaften und Parameter der Feldgeräte, Gateways, Remote I/Os etc. des Feldbusnetzwerks 100. Diese Informationen werden von den Herstellern der unterschiedlichen Geräte in der Regel in Form von Gerätebeschreibungsdateien oder Gerätetreibern zur Verfügung gestellt. Zur Gerätebeschreibung für den azyklischen Datenaustausch werden bei den Feldbusprotokollen Profibus-DP, Profibus-PA, Fieldbus Foundation und HART Gerätebeschreibungen gemäß den Standards DTM (Device Type Manager), DD (Device Description), EDD (Enhanced Device Description) sowie FDI Device Packages verwendet. Insbesondere bei den Standards EDD und DTM werden zusätzlich zu Geräteparametern, Gerätefunktionalität und Adressraumbelegung auch Grafikfeatures und grafische Benutzeroberflächen spezifiziert, die die Parametrierung und Konfigurierung des jeweiligen Feldgeräts erleichtern sollen. Zur Erzeugung dieser grafischen Oberflächen sind im Standard EDD spezielle Grafikbefehle vorgesehen, die nach Art einer Interpreter-Sprache abgearbeitet werden.

Im Standard FDT/DTM werden die DTMs (Device Type Manager) in Form von dynamisch ladbaren Bibliotheken (DLLs) oder in Form von ausführbaren Dateien (Executables) zur Verfügung gestellt. Ein DTM umfasst auch die genannten Grafikfeatures. Die verschiedenen DTMs zu den verschiedenen Komponenten des Feldbusnetzwerks werden in eine gemeinsame FDT-Rahmenapplikation eingebunden, wobei FDT für "Field Device Tool" steht. Dadurch wird eine gemeinsame Rahmenapplikation zur Verfügung gestellt, in die die DTMs zu verschiedenen Geräten und von unterschiedlichen Herstellern eingebunden werden können.

Der FDT-Standard wird in den nächsten Jahren zunehmend durch den Standard FDI Device Packages ergänzt und später eventuell ersetzt.

Neben den bisher diskutierten Feldbusprotokollen Profibus, Fieldbus Foundation und HART gewinnen die sogenannten Industrial Ethernet-Protokolle an Bedeutung, zu denen u.a. die Feldbusprotokolle EtherNet/IP, ProfiNet und EtherCAT gehören. Beim Feldbusprotokoll EtherNet/IP ist eine Gerätebeschreibungsdatei entsprechend dem Standard EDS (Electronic Data Sheet) zur Beschreibung sowohl des zyklischen als auch des azyklischen Datenaustauschs vorgesehen.

Im Beispiel von Figur 1 ist auf dem Host 108 eine Rahmenapplikation 109 installiert, vorzugsweise eine Rahmenapplikation des Standards FDT (Field Device Tool), wobei in die Rahmenapplikation unterschiedliche Treiber für die verschiedenen Geräte und Komponenten des Feldbusnetzwerks 100 eingebunden werden können. In eine FDT-Rahmenapplikation können beispielsweise unterschiedliche Device Type Manager (DTMs) von unterschiedlichen Herstellern eingebunden werden. Neben DTMs können auch anderer Gerätebeschreibungsdateien in die Rahmenapplikation eingebunden werden. Dabei wird die hierarchische Struktur des Feldnetzwerks 100 innerhalb der Rahmenapplikation 109 mithilfe von Treibern beziehungsweise Gerätebeschreibungsdateien nachgebildet, wobei die Anordnung der Treiber beziehungsweise Gerätebeschreibungsdateien dabei spiegelbildlich der Struktur des Feldbusnetzwerks 100 entspricht. Für den Zugriff auf die Komponenten des Feldbusnetzwerks 100 können in eine FDT-Rahmenapplikation beispielsweise eine Anzahl von unterschiedlichen Geräte-DTMs, Gateway-DTMs und Kommunikations-DTMs eingebunden werden. An oberster Stelle der FDT-Topologie steht der Kommunikations-DTM 111. Der Kommunikations-DTM 111 ist dem Feldzugangsgerät 101 zugeordnet und kommuniziert mit diesem über die Ethernetverbindung 110. Der Kommunikation-DTM 111 stellt in gewisser Weise die Außenschnittstelle der Gerätezugriffssoftware dar. Sämtlicher ein- und ausgehender Datenverkehr wird über den Kommunikations-DTM 111 geführt.

Der Geräte-DTM 112 ist in der FDT-Topologie unterhalb des Kommunikations-DTM 111 angeordnet und bildet die Funktionalität des Feldgeräts 103 ab. In der Ebene unterhalb des Kommunikations-DTM 111 ist außerdem ein Gateway-DTM 113 angeordnet, der dem Gateway 104 zugeordnet ist. Über den Gateway-DTM 113 kann der Gateway 104 parametriert und konfiguriert werden. Unterhalb des Gateway-DTM 113 in der FDT-Topologie sind zwei Geräte-DTMs 114, 115 angeordnet, über die auf die Feldgeräte 106, 107 zugegriffen werden kann. Neben dem Standard FDT/DTM gibt es eine Vielzahl von alternativen Standards für die Gerätezugriffssoftware und die darin eingebunden Gerätetreiber.

Von der FDT-Rahmenapplikation aus kann beispielsweise eine Abfrage an eines der Feldgeräte oder an eine andere Komponente des Feldbusnetzwerks gerichtet werden, mit der Gerätespezifikationen zum jeweiligen Gerät abgefragt werden. Auf eine derartige Anfrage hin übermittelt das jeweilige Feldgerät beispielsweise die Hersteller-ID, die Geräte-ID, die Geräteversion beziehungsweise Device Revision, das Geräteprofil beziehungsweise Profile Revision, die Softwareversion beziehungsweise Software Revision, die Protokollversion beziehungsweise Command Revision an die FDT-Rahmenapplikation. Basierend auf diesen Informationen zu den einzelnen Geräten kann die FDT-Rahmenapplikation dem Benutzer die hierarchische Struktur des Feldbusnetzwerks 100 grafisch darstellen, vorzugsweise in Form einer Baumstruktur.

Die Rahmenapplikation und die darin eingebundenen Treiber waren ursprünglich dazu vorgesehen, auf einem stationären Hostrechner installiert zu werden, wobei von dem stationären Hostrechner aus ein Automatisierungsnetzwerk überwacht werden konnte. Der zentrale Hostrechner war als Leitstand vorgesehen, von dem aus der Benutzer Parameter der verschiedenen Feldgeräte und Feldbuskomponenten abrufen, kontrollieren und verändern konnte. Mit der allgemeinen Verfügbarkeit von mobilen Endgeräten wie beispielsweise Tablets, Laptops, Personal Digital Assistants (PDAs) und Smartphones entstand das Bedürfnis, derartige Geräte an den Hostrechner anzubinden, um mittels des mobilen Endgeräts an jedem beliebigen Ort des Automatisierungsnetzwerks Parameter abfragen und verändern zu können. Es hat sich als sehr praktisch erwiesen, die Feldgeräte des Automatisierungsnetzwerks vor Ort zu inspizieren und dabei auch die Parameter der Feldgeräte überprüfen und abändern zu können. Zur Realisierung eines derartigen mobilen Zugriffs auf die Parametrierung und Konfiguration von Feldgeräten und anderen Komponenten des Feldbusnetzwerks ist es notwendig, auf dem jeweiligen mobilen Endgerät die Gerätetreiber für das angesprochene Feldgerät zu installieren und eine Datenverbindung zwischen dem Hostrechner und dem mobilen Endgerät vorzusehen.

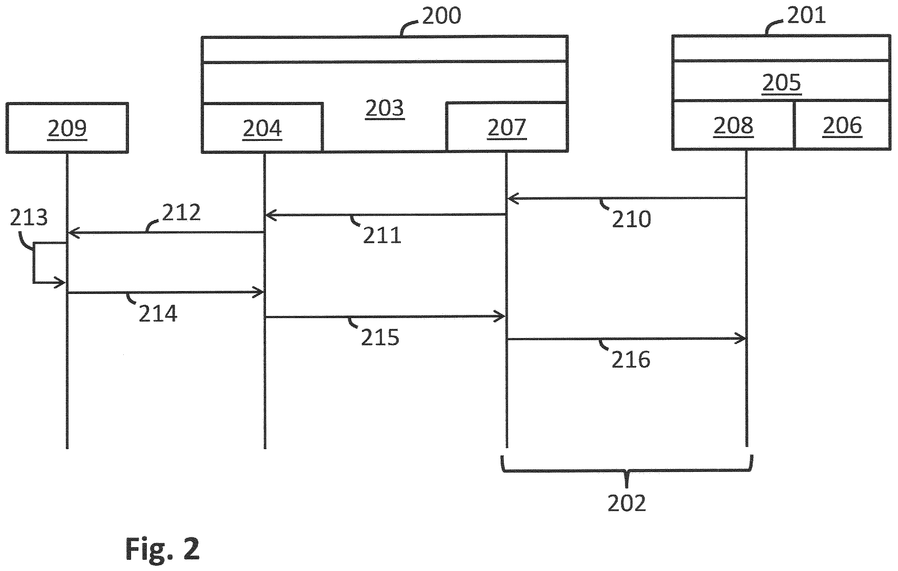

In Figur 2 ist ein derartiges System für den Zugriff auf ein Feldbusnetzwerk schematisch dargestellt. Das Zugriffssystem umfasst einen Server 200 sowie einen Client 201, der mit dem Server 200 über eine Datenverbindung Daten austauschen kann. Bei dem Client 201 handelt es sich vorzugsweise um ein mobiles Endgerät. Beispielsweise kann der Client 201 über ein Computernetzwerk 202, vorzugsweise ein drahtloses Computernetzwerk, mit dem Server 200 in Datenverbindung stehen. Vorzugsweise steht der Client 201 über eine Ethernet-Verbindung mit dem Server 200 in Verbindung.

Auf dem Server 200 ist eine FDT-Rahmenapplikation 203 installiert. Ebenso wie bei der in Figur 1 gezeigten konventionellen Lösung sind in die FDT-Rahmenapplikation 203 mindestens ein Kommunikationstreiber 204 eingebunden, insbesondere ein Kommunikations-DTM sowie gegebenenfalls ein oder mehrere Gateway-DTMs. Über den mindestens einen Kommunikationstreiber 204 wird die Kommunikation mit den Feldgeräten und den sonstigen Komponenten des Feldbusnetzwerks abgewickelt. Im Unterschied zu der in Figur 1 gezeigten Lösung sind zumindest einige der Geräte-DTMs nicht auf dem Server 200 installiert, sondern vielmehr zum Client 201 hin ausgelagert. Hierzu ist auf dem Client 201 eine FDT-Rahmenapplikation 205 installiert, in die ein oder mehrere Gerätetreiber 206 eingebunden sind. Zur Abwicklung der Kommunikation zwischen dem Server 200 und dem Client 201 ist auf Seiten des Servers 200 ein Kommunikationsproxy 207 vorgesehen, der mit mindestens einem auf Seiten des Client 201 installierten Kommunikations-Stub 208 in Datenverbindung steht. Bei dem mindestens einen Kommunikations-Stub 208 handelt es sich um den Kommunikationstreiber des Client 201. Der mindestens eine Kommunikations-Stub 208 ist auf Seiten des Client 201 für die Abwicklung des Datenaustauschs mit dem Kommunikationsproxy 207 vorgesehen.

Bei der in Figur 2 gezeigten schematischen Darstellung ist lediglich ein Client 201 vorgesehen. Alternativ dazu können auch mehrere Clients mit einem zentralen Server 200 in Datenverbindung stehen, wobei in diesem Fall auf jedem der Clients mindestens ein Kommunikations-Stub installiert ist, der mit dem Kommunikationsproxy 207 des zentralen Servers 200 in Datenverbindung steht.

Im Folgenden soll der Fall diskutiert werden, dass ein Benutzer von einem der Gerätetreiber 206 auf dem Client 201 aus eine Abfrage an das zugehörige Feldgerät 209 richtet. Diese Abfrage wird vom jeweiligen Gerätetreiber 206 aus über den zugehörigen Kommunikations-Stub 208 entsprechend dem Pfeil 210 zum Kommunikationsproxy 207 übertragen. Dort wird der eingehende Datenverkehr in den zugehörigen Kommunikationskanal eingespeist und entsprechend den Pfeilen 211, 212 über den mindestens einen Kommunikationstreiber 204 zum Feldgerät 209 übertragen. Wie in Figur 2 durch Pfeil 213 veranschaulicht, beantwortet das Feldgerät 209 die Anfrage und übermittelt den gewünschten Parameter entsprechend den Pfeilen 214, 215 über den mindestens einen Kommunikationstreiber 204 zum Kommunikationsproxy 207. Von dort wird die Information entsprechend Pfeil 216 über das Computernetzwerk 202 zum jeweiligen Kommunikations-Stub 208 und zum jeweiligen Gerätetreiber 206 übertragen, wo der angeforderte Parameter dem Benutzer angezeigt wird. Für den Gerätetreiber ist die Kommunikation über das Computernetzwerk 202 und den Server 200 zum Feldgerät 209 transparent.

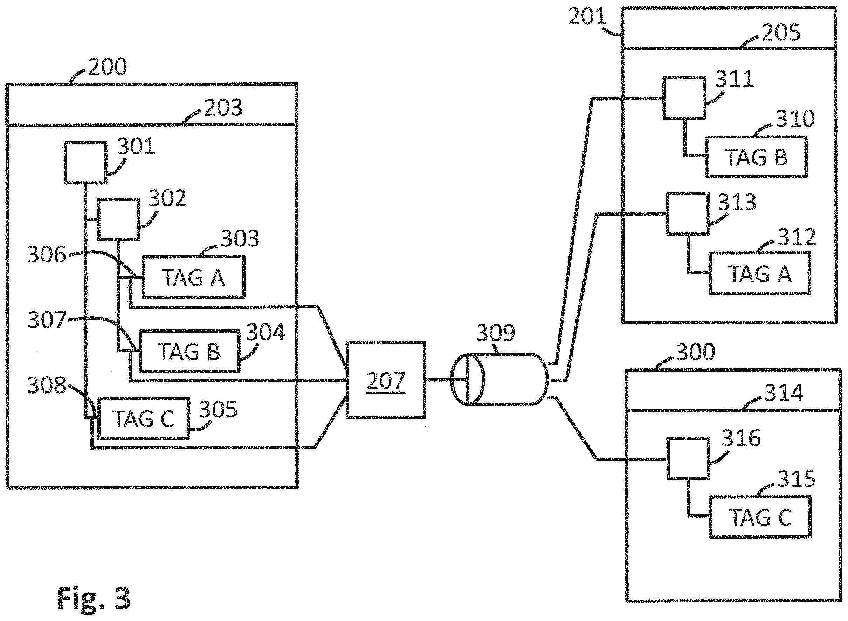

In Figur 3 sind die Kommunikationsverbindungen zwischen einem Server 200, einem ersten Client 201 und einem zweiten Client 300 im Detail dargestellt, wobei die Kommunikationsverbindungen wieder über den Kommunikationsproxy 207 geführt werden, der auf dem Server 200 vorgesehen ist. Auf dem Server 200 ist die FDT-Rahmenapplikation 203 installiert, in die ein Kommunikations-DTM 301 sowie ein Gateway-DTM 302 eingebunden sind, über die auf das Feldbusnetzwerk zugegriffen werden kann. Die Geräte-DTMs für den Zugriff auf die Feldgeräte bzw. Feldbuskomponenten werden nicht oder zumindest nicht alle in die FDT-Rahmenapplikation eingebunden, sondern vielmehr zu den Clients 201, 300 hin verlagert. Für die ausgelagerten Geräte-DTMs werden auf Seiten des Servers 200 jeweils Platzhalter-DTMs 303, 304, 305 in die FDT-Topologie eingefügt. Diese Platzhalter-DTMs 303 bis 305 dienen als Platzhalter für die ausgelagerten Geräte-DTMs, die auf den Clients 201, 300 installiert sind. Die Platzhalter-DTMs dienen zur eindeutigen Kennzeichnung der zugehörigen Kommunikationskanäle 306, 307, 308 sowie der Feldgeräte bzw. Feldbuskomponenten, die über diese Kommunikationskanäle 306 bis 308 erreicht werden können. Zur Kennzeichnung der jeweiligen Feldbuskomponente sowie des zugehörigen Kommunikationskanals wird dabei ein sogenanntes "Tag" als eindeutiger Identifikator verwendet. Als Tag kann beispielsweise eine KKS-Kennung nach dem Kraftwerkkennzeichnungssystem verwendet werden, als Tag kann aber auch die Seriennummer und/oder die Herstellernummer einer Komponente des Feldbusnetzwerks verwendet werden. Wichtig bei der Festlegung des Tags ist, dass jedes Feldgerät und jede andere Komponente des Automatisierungsnetzwerks eindeutig und unterscheidbar gekennzeichnet ist. Zur Festlegung der Tags gibt es verschiedene Alternativen. Das jeweilige Tag kann entweder im Feldgerät bzw. der Feldbuskomponente abgelegt sein. Alternativ dazu kann das jeweilige Tag dem Gerät zugewiesen und dann im Gerät abgelegt werden. Eine weitere Möglichkeit ist, das Tag in der FDT-Topologie festzulegen und zu verwenden.

Im Beispiel von Figur 3 werden die Tags zur Kennzeichnung des jeweiligen Feldgeräts bzw. der jeweiligen Feldbuskomponente, des zugehörigen Geräte-DTM und des Kommunikationskanals verwendet, wobei der Kommunikationskanal das Feldgerät bzw. die Feldbuskomponente mit dem zugehörigen Geräte-DTM verbindet.

Im Beispiel von Figur 3 ist der Kommunikationskanal 306 mittels des Platzhalter-DTM 303 mit dem "Tag A" versehen, der Kommunikationskanal 307 ist durch den Platzhalter-DTM 304 mit "Tag B" gekennzeichnet und der Kommunikationskanal 308 ist mittels des Platzhalter-DTM 305 mit "Tag C" versehen. Die durch die Platzhalter-DTMs bereitgestellten Tags A, B, C dienen für den Kommunikationsproxy 207 als Flaggen, welche anzeigen, an welcher Stelle die von den Clients 201 , 300 empfangenen Daten in die Kommunikationskanäle 306 bis 308 auf Seiten des Servers 200 eingespeist werden müssen. Dabei wird der zugehörige Kommunikationskanal entsprechend dem Tag, mit dem der empfangene Datenverkehr gekennzeichnet ist, ausgewählt. Über den ausgewählten Kommunikationskanal werden die Daten dann zu dem zugehörigen Feldgerät bzw. der zugehörigen Feldbuskomponente des Automatisierungsnetzwerks übertragen.

In umgekehrter Richtung zeigen die durch die Platzhalter-DTMs bereitgestellten Tags A, B, C dem Kommunikationsproxy 207 an, an welchen Stellen der von den Feldgeräten und den anderen Komponenten des Automatisierungsnetzwerks empfangene Datenverkehr vom Kommunikationsproxy 207 auf Seiten des Servers 200 entnommen werden kann. Dabei sind sowohl die Feldgeräte bzw. Feldbuskomponenten des Automatisierungsnetzwerks als auch die zugehörigen Kommunikationskanäle 306 bis 308 jeweils übereinstimmend mit "Tag A", "Tag B", "Tag C" gekennzeichnet. Der Kommunikationsproxy 207 ist dann dafür zuständig, den jeweiligen Datenverkehr über das Kommunikationsmedium 309 jeweils an einen der angeschlossenen Clients 201, 300 weiterzuleiten.

Um mit dem Server 200 kommunizieren zu können, muss auf Seiten der Clients 201, 300 jeweils die IP-Adresse des Servers 200 bekannt sein. Darüber hinaus wird den Clients 201, 300 vom Server 200 eine Liste der Feldgeräte und Feldbuskomponenten übergeben, in der die Zuordnung der Feldgeräte bzw. Feldbuskomponenten zu den zugehörigen Tags aufgeführt ist. Ausgehend von dieser Liste können auf Seiten der Clients 201, 300 die passenden Softwarekomponenten für die Kommunikation mit dem Server 200 und dem Automatisierungsnetzwerk installiert werden. Auf dem Client 201 ist die FDT-Rahmenapplikation 205 installiert. In diese FDT-Rahmenapplikation 205 ist ein geeigneter Geräte-DTM 310 für den Zugriff auf das Feldgerät bzw. die Feldbuskomponente, die mit "Tag B" gekennzeichnet ist, installiert. Darüber hinaus ist ein zugehöriger Kommunikations-Stub 311 installiert, der die Kommunikation mit dem Kommunikationsproxy 207 abwickelt, sodass dieser Kommunikations-Stub 311 für den Client 201 die Funktion eines Kommunikation-DTM übernimmt. Außerdem ist in die FDT-Rahmenapplikation 205 ein weiterer Geräte-DTM 312 eingebunden, der für den Zugriff auf das mit "Tag A" gekennzeichnete Feldgerät bzw. Feldbuskomponente vorgesehen ist. Auch zu diesem Geräte-DTM 312 wird ein zugehöriger Kommunikations-Stub 313 installiert.

Entsprechende Softwarekomponenten sind auch auf dem zweiten Client 300 installiert. In die FDT-Rahmenapplikation 314 des Clients 300 ist ein Geräte-DTM 315 für den Zugriff auf die mit "Tag C" gekennzeichnete Komponente des Automatisierungsnetzwerks eingebunden und außerdem ist ein zugehöriger Kommunikations-Stub 316 vorgesehen.

Der Datenaustausch zwischen dem Kommunikationsproxy 207 und den Kommunikations-Stubs 311, 313, 316 erfolgt über das Kommunikationsmedium 309. Bei dem Kommunikationsmedium 309 kann es sich beispielsweise um ein Computernetzwerk handeln, beispielsweise um Ethernet, Wireless LAN, Internet, etc. Die Datenverbindung zwischen dem Kommunikationsproxy 207 und den Kommunikations-Stubs 311, 313, 316 ist dabei für den Benutzer, der mit dem jeweiligen Geräte-DTM 310, 312, 315 interagiert, vollkommen transparent. Der Benutzer hat den Eindruck, über sein mobiles Endgerät und den darauf installierten Geräte-DTM unmittelbar auf das jeweilige Feldgerät bzw. die jeweilige Feldbuskomponente des Automatisierungsnetzwerks zugreifen zu können.

In Figur 4 ist die Verbindung zwischen dem Server 200, dem Kommunikationsproxy 207 und dem Client 300 noch einmal dargestellt, wobei der in Figur 4 gezeigte Kommunikationsproxy 207 zusätzlich ein Prüfmodul zur Überwachung des Datenverkehrs zwischen dem Server 200 und dem Client 300 umfasst. Auf dem in Figur 4 gezeigten Server 200 ist die FDT-Rahmenapplikation 203 installiert, in die der Kommunikations-DTM 301 sowie der mit "Tag C" gekennzeichnete Platzhalter-DTM 305 eingebunden ist. Auf dem Client 300 ist die FDT-Rahmenapplikation 314 installiert, in die der Geräte-DTM 315 zu "Tag C" und der zugehörige Kommunikations-Stub 316 eingebunden sind. Die Datenverbindung zwischen dem serverseitigen Kommunikationskanal 308 und dem clientseitigen Geräte-DTM 315 wird über den Kommunikationsproxy 207 hergestellt, wobei die Daten über das Kommunikationsmedium 309 zwischen dem Server 200 und dem Client 300 ausgetauscht werden können.

Auf Seiten des Kommunikationsproxy 207 wird der Datenaustausch in beiden Richtungen durch ein Kommunikationsmodul 400 abgewickelt. Das Kommunikationsmodul 400 ist unter anderem dafür zuständig, für vom Client 300 an den Server 200 gerichtete Anfragen das passende Tag in der FDT-Topologie ausfindig zu machen, um den Datenstrom auf Seiten des Servers 200 in den passenden Kommunikationskanal einspeisen zu können. Dem Kommunikationsmodul 400 ist das Prüfmodul 401 zugeordnet, das dazu ausgelegt ist, vom Server 200 bzw. vom Client 300 eingehende Daten zu überprüfen. Diese Überprüfung der beiderseitigen Datenströme kann insbesondere unter Berücksichtigung des Kontextes der Datenübertragung in einem FDT-/DTM-Umfeld durchgeführt werden. Bei der Überprüfung der Datenströme durch das Prüfmodul 401 kann daher auch ein Vergleich mit dem im FDT-/DTM-Standard vorgesehenen Ablauf und mit der zeitlichen Abfolge der Datenübertragung durchgeführt werden. Das Prüfmodul 401 kann beispielsweise dazu ausgelegt sein, eingehende bzw. ausgehende Kommunikation gegen ein vorgegebenes Regelwerk 402 abzugleichen, um auf diese Weise Störungen und Regelwidrigkeiten im Informationsaustausch zwischen Client 300 und Server 200 zu erkennen.

Zusätzlich zur Analyse der ein- und ausgehenden Datenströme kann das Prüfmodul 401 beispielsweise auch Antwortzeiten der verschiedenen Systemkomponenten erfassen und auswerten. Dabei können lange Antwortzeiten beispielsweise darauf hindeuten, dass bei der Datenübertragung Störungen auftreten, die eine erneute Übertragung der jeweiligen Daten auslösen. Derartige Störungen der Verbindung können beispielsweise dann entstehen, wenn elektromagnetische Störungen in die Verbindungsleitungen eingekoppelt werden. Eine Überwachung der Antwortzeiten liefert einen wichtigen Baustein für die Überwachung des Datenaustauschs.

Sämtliche bei der Datenübertragung auftretenden Probleme sowie die zugehörigen Parameter wie beispielsweise Antwort- und Verzögerungszeiten können an ein Auswertungsmodul 403 übermittelt werden, das diese Störungen als Funktion der Zeit protokolliert. Darüber hinaus kann vorgesehen sein, eine statistische Auswertung der auftretenden Fehler und Störungen durchzuführen, um auf diese Weise häufig von Störungen betroffene Hard- und Softwarekomponenten identifizieren zu können.

Zusätzlich zu Fehlerdiagnose und Fehlerprotokollierung kann das Prüfmodul 401 dazu ausgelegt sein, auftretende Störungen durch geeignete Maßnahmen zu beheben. Beispielsweise können im Regelwerk 402 zu verschiedenen möglichen Störungen geeignete Gegenmaßnahmen zur Behebung der jeweiligen Störung vorgegeben werden. Derartige Maßnahmen können beispielsweise das Beenden einer Datenverbindung, das Blockieren von fehlerhaften Datenströmen sowie den Neustart von unterschiedlichen Hard- und Softwarekomponenten umfassen.

Im Folgenden werden einige typische Störungen beschrieben, die in einer verteilten FDT-/DTM-Umgebung mit Server- und Clientrechnern typischerweise auftreten können. Dabei werden zu jeder beschriebenen Störung geeignete Gegenmaßnahmen diskutiert, mit denen auf die jeweilige Störung reagiert werden kann.

### Client meldet sich nicht mehr

Bei dieser Störung empfängt der Proxy über längere Zeit hinweg keinerlei Nachrichten vom Client. Die Ursache hierfür kann beispielsweise ein Ausfall des Verbindungsnetzwerks zwischen Client und Server sein, beispielsweise infolge schlechter Empfangsqualität des WLAN. Die Ursache könnte aber auch ein Softwarefehler auf Seiten des Client oder ein Ausfall der clientseitigen FDT-Rahmenapplikation mit dem darin eingebundenen Kommunikations-Stub sein. Ursache für diesen Fehler kann jedoch auch sein, dass der Benutzer sein mobiles Endgerät abschaltet oder sich mit dem mobilen Endgerät aus dem Bereich des Verbindungsnetzwerks entfernt. Das Auftreten dieses Fehlers führt dazu, dass auf Seiten des Servers eine anwachsende Zahl von Verbindungen offen steht, die nicht mehr von den zugehörigen Clients bedient werden und die daher mit der Zeit immer mehr Ressourcen des Servers belegen. Zur Erfassung dieser Störung kann beispielsweise auf Seiten des Kommunikationsproxy eine Time-Out-Funktion vorgesehen sein, die jedes Mal bei Empfang einer Nachricht vom Client auf einen vorgegebenen Wert gesetzt wird. Ein Time-Out-Fehler liegt dann vor, wenn sich der Client innerhalb der vordefinierten Zeitspanne nicht mehr meldet. Alternativ zu dieser Timer-Funktionalität könnte der Client auch in regelmäßigen Abständen vom Server angepingt werden, wobei infolge des regelmäßigen Anpingens eine Störung auf Seiten des Client erkannt werden kann. Zur Überwachung der Aktivität des Client könnte alternativ dazu vorgesehen sein, den FDT-Datenverkehr zu überwachen. Wenn ein derartiger Timeout des Client aufgetreten ist, beendet der Server eigenständig die Verbindung zum Client. Auf diese Weise kann die fortschreitende Belegung von Ressourcen durch immer mehr inaktive Verbindungen verhindert werden. Um die bestehende Datenverbindung zum Client abzubauen, kann der Kommunikationsproxy beispielsweise die Funktionalität des auf dem Client installierten Geräte-DTM emulieren und die entsprechenden Befehle zum Beenden der Verbindung in die Kommunikation mit dem Server einspeisen.

Wenn seitens des Kommunikationsproxy 207 eine bestehende Datenverbindung beendet wird, kann es vorkommen, dass sich der Client nach langer Zeit nochmals meldet und über die bereits beendete Datenverbindung Daten zum Server zu übermitteln versucht. Der Benutzer wartet dann an seinem jeweiligen mobilen Endgerät auf eine Antwort des Servers, die er jedoch nicht erhält, weil die Datenverbindung bereits beendet ist. Um dies richtig erkennen zu können, könnte der Kommunikationsproxy eine Liste der beendeten Datenverbindungen führen. Der Kommunikationsproxy würde die vom Client empfangene Anfrage mit dieser Liste vergleichen, könnte dann erkennen, dass sich die Anfrage auf eine bereits abgebaute Verbindung bezieht und könnte dem Client eine entsprechende Fehlermeldung zusenden. Dies hätte den Vorteil, dass der Benutzer über den Time-Out der Verbindung informiert wird und die Möglichkeit bekommt, über den Client eine neue Verbindung zum Server aufzusetzen.

### Client sendet Daten, die nicht zum aktuellen FDT-Zustand passen.

Durch eine Analyse der vom Client erhaltenen Daten kann der Kommunikationsproxy Rückschlüsse auf die Art der gerade empfangenen Nachricht ziehen und insbesondere erkennen, dass die gerade empfangene Kommunikation nicht zum aktuellen Status der "FDT State Machine" passt. Ursache für diesen Fehler könnte beispielsweise ein Fehlverhalten des auf dem Client installierten Geräte-DTM sein. In diesem Fall würde der Kommunikationsproxy die offensichtlich gestörten Daten abblocken und nicht zum Server weiterleiten. Der Kommunikationsproxy würde hier also eine einer Firewall vergleichbare Funktion übernehmen. Darüber hinaus könnte vorgesehen sein, dass der Kommunikationsproxy eine entsprechende Fehlermeldung ausgibt.

### Empfang von korrupten Daten vom Client

Wenn der Client korrupte Daten zum Kommunikationsproxy übermittelt, kann dies beispielsweise daran liegen, dass im Geräte-DTM ein Softwarefehler aufgetreten ist. Auf Seiten des Kommunikationsproxy kann das Prüfmodul korrupte Daten erkennen und die korrupten Daten abblocken, so dass sie nicht zum Server weitergeleitet werden. Darüber hinaus erzeugt das Prüfmodul eine entsprechende Fehlermeldung.

### Verwendung eines in der Topologie nicht existierenden Tags

Bei diesem Fehlerfall sendet der Client an den Kommunikationsproxy eine Anfrage, eine Verbindung zu einem bestimmten Tag aufzubauen. Auf Seiten des Kommunikationsproxy erkennt das Prüfmodul jedoch, dass das entsprechende Tag in der FDT-Topologie nicht existiert. Auch in diesem Fall wird die Anfrage des Client abgeblockt und nicht zum Server weitergeleitet. Darüber hinaus wird eine entsprechende Fehlermeldung erzeugt.

### Kommunikationsproxy erhält über einen längeren Zeitraum keine Rückmeldung vom Feldgerät

Wenn der Kommunikationsproxy über einen längeren Zeitraum hinweg keine Rückmeldung von einem Feldgerät bzw. einer Feldbuskomponente oder von den Kommunikationstreibern erhält, dann können die Ursache hierfür beispielsweise ein Netzwerkausfall, ein Fehler der Softwarekomponenten, insbesondere der FDT-Rahmenapplikation und der Kommunikationstreiber, ein Fehler auf Seiten des Feldgeräts oder Verbindungs- und Erdungsprobleme bei der Verbindung zum Feldgerät sein. Auf Seiten des Kommunikationsproxy kann eine Timer-Funktionalität vorgesehen sein, die überprüft, ob innerhalb einer vorgegebenen Zeitspanne eine Rückmeldung vom Feldgerät bzw. von der Feldbuskomponente vorliegt. Wenn innerhalb der vorgegebenen Zeitspanne keine Rückmeldung vorhanden ist, dann liegt ein Time-Out-Fehler vor. In diesem Fall wird der Kommunikationsproxy die Datenverbindung über die Kommunikationstreiber zum Automatisierungsnetzwerk beenden und eine Fehlermeldung ausgeben. Darüber hinaus kann der Kommunikationsproxy selbsttätig Maßnahmen zur Fehlerbehebung ergreifen. Beispielsweise könnte der Kommunikationsproxy einen Neustart des Feldgeräts bzw. der Feldbuskomponente und/oder einen Neustart von Softwarekomponenten, also beispielsweise der FDT-Rahmenapplikation, sowie von einem oder mehreren Kommunikationstreibern veranlassen.

### Kommunikationsproxy empfängt von den Kommunikationstreibern Daten, die nicht zum aktuellen FDT-Zustand passen

Das Prüfmodul des Kommunikationsproxy analysiert die von den Kommunikationstreibern erhaltenen Daten und überprüft, ob diese Daten zum aktuellen Zustand der "FDT State Machine" passen. Wenn die erhaltenen Daten nicht zum aktuellen Zustand passen, blockiert der Kommunikationsproxy die Weiterleitung der Daten zum Client. Darüber hinaus kann der Kommunikationsproxy weitere Maßnahmen zur Fehlerbehebung einleiten, beispielsweise die Verbindung trennen, die FDT-Rahmenapplikation neu starten, etc.

### Empfang von korrupten Daten von den Kommunikationstreibern

Das Prüfmodul des Kommunikationsproxy analysiert die von den Kommunikationstreibern empfangenen Daten und erkennt, dass die Daten korrupt sind. Ursache hierfür kann ein Fehler im Feldgerät sein, es können aber auch Verbindungs- und Erdungsprobleme für die korrupten Daten verantwortlich sein. Darüber hinaus kann es auch an den Softwarekomponenten, also insbesondere an der FDT-Rahmenapplikation und den Kommunikationstreibern liegen, dass der Kommunikationsproxy korrupte Daten empfängt. Auf Seiten des Kommunikationsproxy werden die korrupten Daten abgeblockt und nicht zum Client weitergeleitet. Darüber hinaus ist es beispielsweise möglich, dass der Kommunikationsproxy zur Fehlerbehebung die Verbindung trennt und verschiedene Komponenten neu startet. Beispielsweise könnte das Prüfmodul die korrupten Daten analysieren und daraus Rückschlüsse ziehen, durch welche Komponente des Feldbusnetzwerks die Störung verursacht wurde, um dann diese Komponente gezielt neu zu starten. Eine sinnvolle Strategie könnte auch sein, zuerst das Feldgerät neu zu starten, dann zu detektieren, ob die Daten weiterhin korrupt sind, und dann im nächsten Schritt weitere Komponenten des Feldbusnetzwerks neu zu starten.

### Zugriff auf das falsche Feldgerät bzw. die falsche Feldbuskomponente

Bei diesem Fehler wird statt auf das Feldgerät A auf das Feldgerät B zugegriffen, vordergründig sieht es aber so aus, als ob auf Gerät A zugegriffen wurde. Ursache hierfür kann ein Softwarefehler in einem Gateway-DTM, im Kommunikations-DTM oder ein Fehler im Feldzugangsgerät sein. Auf Seiten des Kommunikationsproxy kann dieser Fehler daran erkannt werden, dass die Seriennummer oder Geräteadresse in den übertragenen Daten nicht mit der Kommunikationskanaladresse übereinstimmt. In diesem Fall würde der Kommunikationsproxy die empfangenen Daten nicht zum Client weiterleiten. Darüber hinaus könnte der Kommunikationsproxy einen Neustart der verantwortlichen Systemkomponenten veranlassen.

### FDT-Rahmenapplikation reagiert nicht bzw. nur sehr verzögert

Eine fehlende bzw. ausbleibende Antwort der FDT-Rahmenapplikation könnte auf Seiten des Kommunikationsproxy anhand einer Verlängerung der Antwortzeiten oder am Auftreten eines Timeout erkannt werden. Der Kommunikationsproxy könnte daraufhin einen Neustart der FDT-Rahmenapplikation veranlassen.

### Systemlast auf dem Computer ist sehr hoch

Eine hohe Systemlast kann beispielsweise durch einen hohen Speicherverbrauch oder durch eine hohe Netzwerklast bedingt sein und äußert sich in langen Antwortzeiten, die vom Kommunikationsproxy detektiert werden können. Der Kommunikationsproxy würde den Benutzer auf die hohe Systemlast aufmerksam machen und gegebenenfalls vorschlagen, einzelne Vorgänge zu beenden.

### Ausfall von benötigten Systemkomponenten

Der Ausfall von benötigten Komponenten, beispielsweise der Ausfall des von der FDT-Rahmenapplikation benötigten Datenbankservers, führt bei der Beantwortung von Anfragen zu Time-Out-Fehlern, die vom Kommunikationsproxy erkannt werden. Der Kommunikationsproxy könnte aus dem Vorkommen der Fehler erschließen, welche Komponente ausgefallen ist und einen Neustart dieser Komponente veranlassen.

## Patentansprüche

1. Eine Gerätezugriffseinrichtung für ein Client-Server-System, das einen Server (200) und einen Client (201, 300) umfasst, wobei mit der Gerätezugriffseinrichtung auf Komponenten (209) eines Feldbusnetzwerks zugegriffen werden kann und wobei die Gerätezugriffseinrichtung aufweist:
- eine Rahmenapplikation (203), die auf dem Server (200) installiert ist und die dazu ausgelegt ist, mit Komponenten (209) des Feldbusnetzwerks Daten auszutauschen, wobei zur Kennzeichnung der jeweiligen Komponente (209) des Feldbusnetzwerks sowie eines zugehörigen Kommunikationskanals ein Tag als eindeutiger Identifikator verwendet wird;
- einen Gerätetreiber (206, 310, 312, 315), der auf dem Client (201, 300) installiert ist,
- einen Kommunikationsproxy (207), der auf dem Server (200) installiert ist und dazu ausgelegt ist, mindestens eine Datenverbindung zwischen dem Server (200) und dem Client (201, 300) herzustellen, wobei über die mindestens eine Datenverbindung Daten zwischen dem Gerätetreiber (206, 310, 312, 315) und einer dem Gerätetreiber zugeordneten Komponente (209) des Feldbusnetzwerks übertragbar sind, wobei der Kommunikationsproxy (207) dazu ausgelegt ist, einen Datenverkehr auf der mindestens einen Datenverbindung zwischen Client (201, 300) und Server (200) zu überwachen und Fehler in der Datenübertragung zu erkennen,
**gekennzeichnet durch** mindestens eines von folgenden:
- der Kommunikationsproxy ist dazu ausgelegt, für den Fall, dass in einer der Datenverbindungen ein Client während mindestens einer vorbestimmten Zeitspanne Anfragen nicht beantwortet oder inaktiv ist, die Datenverbindung zu beenden;
- der Kommunikationsproxy ist dazu ausgelegt, für den Fall, dass der Kommunikationsproxy vom Client eine Anfrage mit einem Tag einer bereits beendeten Verbindung erhält, die Anfrage nicht zum Server weiterzuleiten;
- der Kommunikationsproxy ist dazu ausgelegt, für den Fall, dass in einer der Datenverbindungen eine Komponente des Feldbussystems während mindestens einer vorbestimmten Zeitspanne Anfragen nicht beantwortet oder inaktiv ist, die Datenverbindung zu beenden;
- der Kommunikationsproxy ist dazu ausgelegt, zur Fehlerbehebung mindestens eines von folgenden neu zu starten: die Rahmenapplikation auf Seiten des Servers, mindestens einen Kommunikationstreiber auf Seiten des Servers, ein Feldzugangsgerät des Feldbusnetzwerks, eine Komponente des Feldbusnetzwerks;
- der Kommunikationsproxy ist dazu ausgelegt, für den Fall, dass der Kommunikationsproxy korrupte Daten von der Rahmenapplikation des Servers empfängt, die empfangenen Daten nicht zum Client weiterzuleiten;
- der Kommunikationsproxy ist dazu ausgelegt, für den Fall, dass der Kommunikationsproxy von der Rahmenapplikation des Servers Daten empfängt, die nicht dem aktuellen Status des Protokollablaufs in der Rahmenapplikation entsprechen, die empfangenen Daten nicht zum Client weiterzuleiten;
- der Kommunikationsproxy ist dazu ausgelegt, einen Neustart einer jeweiligen Komponente zu veranlassen für den Fall, dass der Kommunikationsproxy erkennt, dass eine von folgenden Komponenten abgestürzt ist oder nur verzögert reagiert: eine Komponente des Feldbusnetzwerks, ein Feldzugangsgerät des Feldbusnetzwerks, die Rahmenapplikation auf dem Server, mindestens ein Kommunikationstreiber auf Seiten des Servers, von der Rahmenapplikation benötigte Komponenten wie beispielsweise ein Datenbankserver.

2. Gerätezugriffseinrichtung nach Anspruch 1, **dadurch gekennzeichnet, dass** der Kommunikationsproxy dazu ausgelegt ist, die Datenübertragung zwischen Client und Server zur Erkennung von Fehlern mit einem vorgegebenen Regelwerk zu vergleichen.

3. Gerätezugriffseinrichtung nach Anspruch 1 oder Anspruch 2, **gekennzeichnet durch** mindestens eines von folgenden:
- der Kommunikationsproxy ist dazu ausgelegt, bei erkannten Fehlern selbsttätig Maßnahmen zur Fehlerbehebung zu veranlassen;
- der Kommunikationsproxy ist dazu ausgelegt, bei erkannten Fehlern in Abhängigkeit vom Fehlerbild selbsttätig Maßnahmen zur Fehlerbehebung zu veranlassen.

4. Gerätezugriffseinrichtung nach einem der Ansprüche 1 bis 3, **gekennzeichnet durch** mindestens eines von folgenden:
- der Kommunikationsproxy ist dazu ausgelegt, die Datenübertragung zwischen Client und Server unter Berücksichtigung von Kommunikationsabläufen zwischen Feldbusnetzwerk, Rahmenapplikation und Gerätetreiber zu überwachen;
- bei der Rahmenapplikation handelt es sich um eine FDT-Rahmenapplikation und der Kommunikationsproxy ist dazu ausgelegt, die Datenübertragung zwischen Client und Server unter Berücksichtigung der Abläufe im Standard FDT/DTM zu überwachen.

5. Gerätezugriffseinrichtung nach einem der Ansprüche 1 bis 4, **gekennzeichnet durch** mindestens eines von folgenden:
- der Kommunikationsproxy ist dazu ausgelegt, erkannte Fehler zu protokollieren;
- der Kommunikationsproxy umfasst eine Cachefunktionalität, welche Antworten auf frühere Anfragen des Client speichert und bei späteren Anfragen des Client zur Verfügung stellt;
- der Kommunikationsproxy ist dazu ausgelegt, eine Fehlerstatistik zu erstellen, aus der hervorgeht, bei welchen Komponenten gehäuft Fehler auftreten;
- der Kommunikationsproxy ist dazu ausgelegt, Antwortzeiten seitens des Feldbusnetzwerks und/oder Antwortzeiten seitens des Clients zu erfassen, mit Erwartungswerten zu vergleichen und daraus Informationen zur Fehlerdiagnose abzuleiten.

6. Gerätezugriffseinrichtung nach einem der Ansprüche 1 bis 5, **gekennzeichnet durch** mindestens eines von folgenden:
- der Kommunikationsproxy ist dazu ausgelegt, vom Client empfangene Daten bei mangelnder Datenintegrität nicht zum Server weiterzuleiten;
- der Kommunikationsproxy ist dazu ausgelegt, vom Feldbusnetzwerk empfangene Daten bei mangelnder Datenintegrität nicht zum Client weiterzuleiten.

7. Gerätezugriffseinrichtung nach einem der Ansprüche 1 bis 6, **dadurch gekennzeichnet, dass** der Kommunikationsproxy dazu ausgelegt ist, Datenverbindungen zwischen Server und Client, die über eine vorgegebene Zeitspanne hinweg nicht verwendet werden, zu beenden.

8. Gerätezugriffseinrichtung nach einem der Ansprüche 1 bis 7, **dadurch gekennzeichnet, dass** der Kommunikationsproxy dazu ausgelegt ist, die Datenübertragung zu überwachen und in Abhängigkeit vom jeweiligen Fehlerbild mindestens eines von folgenden zu veranlassen:
- Beenden einer Datenverbindung zwischen Client und Server,
- Nichtweiterleiten und Abblocken von fehlerhaften Daten,
- Korrigieren eines Datenstroms,
- Herunterfahren einer Hardware- oder Softwarekomponente,
- Neustart einer Komponente des Feldbusnetzwerks,
- Neustart der Rahmenapplikation des Servers,
- Neustart von mindestens einem der in die Rahmenapplikation eingebundenen Kommunikationstreiber,
- Neustart eines Feldzugangsgeräts des Feldbusnetzwerks.

9. Gerätezugriffseinrichtung nach einem der Ansprüche 1 bis 8, **dadurch gekennzeichnet, dass** eine Komponente des Feldbusnetzwerks, ein zugehöriger Kommunikationskanal und ein zugehöriger Gerätetreiber mit einem eindeutigen Tag gekennzeichnet sind, das eine Zuordnung von Feldbuskomponente, Kommunikationskanal und Gerätetreiber zueinander ermöglicht.

10. Gerätezugriffseinrichtung nach einem der Ansprüche 1 bis 9, **gekennzeichnet durch** mindestens eines von folgenden:
- der Kommunikationsproxy ist dazu ausgelegt, einen Datenverkehr, den der Kommunikationsproxy von einem auf Seiten des Client installierten Gerätetreiber empfängt, entsprechend dem Tag des Datenverkehrs in einen zugehörigen Kommunikationskanal einzuspeisen;
- der Kommunikationsproxy ist dazu ausgelegt, Datenverkehr, den der Kommunikationsproxy über die von den Kommunikationstreibern bereitgestellten Kommunikationskanäle empfängt, entsprechend dem Tag des Datenverkehrs zu einem zugehörigen Gerätetreiber auf Seiten des Client weiterzuleiten,
und/oder **gekennzeichnet durch** mindestens eines von folgenden:
- der Kommunikationsproxy ist dazu ausgelegt, die mindestens eine Datenverbindung zwischen Client und Server über ein Computernetzwerk herzustellen;
- der Kommunikationsproxy ist dazu ausgelegt, die mindestens eine Datenverbindung zwischen Client und Server über ein Computernetzwerk herzustellen, wobei es sich bei dem Computernetzwerk um mindestens eines von folgenden handelt: ein Wireless LAN, eine Ethernet-Verbindung, eine Internet-Verbindung;
- bei dem Client handelt es sich um ein mobiles Endgerät;
- bei dem Client handelt es sich um mindestens eines von folgenden: ein Laptop, ein Tablett, ein Mobiltelefon, ein Smartphone, ein PDA
und/oder **gekennzeichnet durch** mindestens eines von folgenden:
in die Rahmenapplikation sind Treiber- oder Nutzsoftwarekomponenten entsprechend einem oder mehreren der folgenden Standards einbindbar: DTM, DD, EDD, EDS, FDI Device Packages;
- bei der Rahmenapplikation handelt es sich um eine FDT-Rahmenapplikation und in die FDT-Rahmenapplikation sind Treiber- und Nutzsoftwarekomponenten des Standards DTM einbindbar.

11. Ein Server (200), der mit einem Feldbusnetzwerk verbindbar ist, wobei der Server dazu ausgelegt ist, eine Datenverbindung zu einem Client (201, 300) zu unterhalten und wobei der Server (200) aufweist:
- eine Rahmenapplikation (203), die auf dem Server (200) installiert ist und dazu ausgelegt ist, mit Komponenten (209) des Feldbusnetzwerks Daten auszutauschen, wobei zur Kennzeichnung der jeweiligen Komponente (209) des Feldbusnetzwerks sowie eines zugehörigen Kommunikationskanals ein Tag als eindeutiger Identifikator verwendet wird;
- einen Kommunikationsproxy (207), der auf dem Server (200) installiert ist und dazu ausgelegt ist, mindestens eine Datenverbindung zwischen dem Server (200) und dem Client (201, 300) herzustellen, wobei über die mindestens eine Datenverbindung Daten zwischen einem auf dem Client (201, 300) installierten Gerätetreiber (206, 310, 312, 315) und einer dem Gerätetreiber zugeordneten Komponente (209) des Feldbusnetzwerks übertragbar sind, wobei der Kommunikationsproxy (207) dazu ausgelegt ist, einen Datenverkehr auf der mindestens einen Datenverbindung zwischen Client (201, 300) und Server (200) zu überwachen und Fehler in der Datenübertragung zu erkennen,
**gekennzeichnet durch** mindestens eines von folgenden:
- der Kommunikationsproxy ist dazu ausgelegt, für den Fall, dass in einer der Datenverbindungen ein Client während mindestens einer vorbestimmten Zeitspanne Anfragen nicht beantwortet oder inaktiv ist, die Datenverbindung zu beenden;
- der Kommunikationsproxy ist dazu ausgelegt, für den Fall, dass der Kommunikationsproxy vom Client eine Anfrage mit einem Tag einer bereits beendeten Verbindung erhält, die Anfrage nicht zum Server weiterzuleiten;
- der Kommunikationsproxy ist dazu ausgelegt, für den Fall, dass in einer der Datenverbindungen eine Komponente des Feldbussystems während mindestens einer vorbestimmten Zeitspanne Anfragen nicht beantwortet oder inaktiv ist, die Datenverbindung zu beenden;
- der Kommunikationsproxy ist dazu ausgelegt, zur Fehlerbehebung mindestens eines von folgenden neu zu starten: die Rahmenapplikation auf Seiten des Servers, mindestens einen Kommunikationstreiber auf Seiten des Servers, ein Feldzugangsgerät des Feldbusnetzwerks, eine Komponente des Feldbusnetzwerks;
- der Kommunikationsproxy ist dazu ausgelegt, für den Fall, dass der Kommunikationsproxy korrupte Daten von der Rahmenapplikation des Servers empfängt, die empfangenen Daten nicht zum Client weiterzuleiten;
- der Kommunikationsproxy ist dazu ausgelegt, für den Fall, dass der Kommunikationsproxy von der Rahmenapplikation des Servers Daten empfängt, die nicht dem aktuellen Status des Protokollablaufs in der Rahmenapplikation entsprechen, die empfangenen Daten nicht zum Client weiterzuleiten;
- der Kommunikationsproxy ist dazu ausgelegt, einen Neustart einer jeweiligen Komponente zu veranlassen für den Fall, dass der Kommunikationsproxy erkennt, dass eine von folgenden Komponenten abgestürzt ist oder nur verzögert reagiert: eine Komponente des Feldbusnetzwerks, ein Feldzugangsgerät des Feldbusnetzwerks, die Rahmenapplikation auf dem Server, mindestens ein Kommunikationstreiber auf Seiten des Servers, von der Rahmenapplikation benötigte Komponenten wie beispielsweise ein Datenbankserver.

12. Ein System der Automatisierungstechnik, welches aufweist:
einen Server (200) nach Anspruch 11;
einen Client (201, 300), wobei auf dem Client (201, 300) der Gerätetreiber (206, 310, 312, 315) installiert ist und wobei vom Client (201, 300) aus mittels des Gerätetreibers (206, 310, 312, 315) auf eine zugeordnete Komponente (209) des Feldbusnetzwerks zugegriffen werden kann.

13. Ein Verfahren zur Überwachung des Datenverkehrs zwischen einem Server (200) und einem Client (201, 300) eines Client-Server-Systems, über das auf Komponenten (209) eines Feldbusnetzwerks zugegriffen werden kann, wobei auf dem Server (200) eine Rahmenapplikation (203) installiert ist, die dazu ausgelegt ist, mit Komponenten (209) des Feldbusnetzwerks Daten auszutauschen, wobei zur Kennzeichnung der jeweiligen Komponente (209) des Feldbusnetzwerks sowie eines zugehörigen Kommunikationskanals ein Tag als eindeutiger Identifikator verwendet wird, wobei auf dem Server (200) ein Kommunikationsproxy (207) installiert ist, der dazu ausgelegt ist, mindestens eine Datenverbindung zwischen dem Server (200) und dem Client (201, 300) herzustellen, wobei über die mindestens eine Datenverbindung Daten zwischen einem auf dem Client (201, 300) installierten Gerätetreiber (206, 310, 312, 315) und einer dem Gerätetreiber zugeordneten Komponente (209) des Feldbusnetzwerks übertragbar sind, und wobei das Verfahren umfasst:
Überwachen eines Datenverkehrs auf der mindestens einen Datenverbindung zwischen Client (201, 300) und Server (200) durch den Kommunikationsproxy (207) und Erkennen von Fehlern in der Datenübertragung,
**gekennzeichnet durch** mindestens eines der folgenden:
- für den Fall, dass in einer der Datenverbindungen ein Client während mindestens einer vorbestimmten Zeitspanne Anfragen nicht beantwortet oder inaktiv ist, beendet der Kommunikationsproxy die Datenverbindung;
- für den Fall, dass der Kommunikationsproxy vom Client eine Anfrage mit einem Tag einer bereits beendeten Verbindung erhält, leitet der Kommunikationsproxy die Anfrage nicht zum Server weiter;
- für den Fall, dass in einer der Datenverbindungen eine Komponente des Feldbussystems während mindestens einer vorbestimmten Zeitspanne Anfragen nicht beantwortet oder inaktiv ist, beendet der Kommunikationsproxy die Datenverbindung;
- der Kommunikationsproxy startet zur Fehlerbehebung mindestens eines von folgenden neu: die Rahmenapplikation auf Seiten des Servers, mindestens einen Kommunikationstreiber auf Seiten des Servers, ein Feldzugangsgerät des Feldbusnetzwerks, eine Komponente des Feldbusnetzwerks;
- für den Fall, dass der Kommunikationsproxy korrupte Daten von der Rahmenapplikation des Servers empfängt, leitet der Kommunikationsproxy die empfangenen Daten nicht zum Client weiter;
- für den Fall, dass der Kommunikationsproxy von der Rahmenapplikation des Servers Daten empfängt, die nicht dem aktuellen Status des Protokollablaufs in der Rahmenapplikation entsprechen, leitet der Kommunikationsproxy die empfangenen Daten nicht zum Client weiterzuleiten;
- der Kommunikationsproxy veranlasst einen Neustart einer jeweiligen Komponente für den Fall, dass der Kommunikationsproxy erkennt, dass eine von folgenden Komponenten abgestürzt ist oder nur verzögert reagiert: eine Komponente des Feldbusnetzwerks, ein Feldzugangsgerät des Feldbusnetzwerks, die Rahmenapplikation auf dem Server, mindestens ein Kommunikationstreiber auf Seiten des Servers, von der Rahmenapplikation benötigte Komponenten wie beispielsweise ein Datenbankserver.

14. Verfahren nach Anspruch 13, **gekennzeichnet durch** mindestens einen der folgenden Schritte:
- Abgleichen des Datenverkehrs mit einem vorgegebenen Regelwerk durch den Kommunikationsproxy;
- bei Vorliegen von Fehlern, Veranlassen von Maßnahmen zur Fehlerbehebung durch den Kommunikationsproxy.

## Claims

1. A device access device for a client-server system comprising a server (200) and a client (201, 300), wherein the device access device can be used to access components (209) of a fieldbus network, and wherein the device access device comprises:
- a frame application (203) which installed on the server (200) and which is designed to exchange data with components (209) of the fieldbus network, a tag being used as a unique identifier to identify the respective component (209) of the fieldbus network and an associated communication channel;
- a device driver (206, 310, 312, 315) that is installed on the client (201, 300),
- a communication proxy (207) which installed on the server (200) and is designed to establish at least one data connection between the server (200) and the client (201, 300), wherein data can be transmitted via the at least one data connection between the device driver (206, 310, 312, 315) and a component (209) of the fieldbus network assigned to the device driver, wherein the communication proxy (207) is designed to monitor data traffic on the at least one data connection between the client (201, 300) and the server (200) and to detect errors in the data transmission,
**characterized by** at least one of the following:
- the communication proxy is designed to terminate the data connection in the event that a client in one of the data connections does not respond to requests or is inactive for at least a predetermined period of time;
- the communication proxy is designed not to forward the request to the server in the event that the communication proxy receives a request from the client with a tag of an already terminated connection;
- the communication proxy is designed to terminate the data connection in the event that a component of the field bus system does not respond to requests or is inactive for at least a predetermined period of time in one of the data connections;
- the communication proxy is designed to restart at least one of the following for troubleshooting: the frame application on the server side, at least one communication driver on the server side, a field access device of the fieldbus network, a component of the fieldbus network;
- the communication proxy is designed so that if the communication proxy receives corrupt data from the server's frame application, the received data is not forwarded to the client;
- the communication proxy is designed so that if the communication proxy receives data from the server's frame application that does not correspond to the current status of the protocol flow in the frame application, the received data is not forwarded to the client;
- the communication proxy is designed to initiate a restart of a respective component in the event that the communication proxy detects that one of the following components has crashed or is only responding with a delay: a component of the fieldbus network, a field access device of the fieldbus network, the frame application on the server, at least one communication driver on the server side, components required by the frame application, such as a database server.

2. Device access device according to claim 1, **characterized in that** the communication proxy is designed to compare the data transmission between client and server with a predetermined set of rules in order to detect errors.

3. Appliance access device according to claim 1 or claim 2, **characterized by** at least one of the following:
- The communication proxy is designed to automatically initiate troubleshooting measures when errors are detected;
- The communication proxy is designed to automatically initiate troubleshooting measures when errors are detected, depending on the error pattern.

4. Device access device according to any one of claims 1 to 3, **characterized by** at least one of the following:
- The communication proxy is designed to monitor the data transfer between client and server, taking into account communication processes between the fieldbus network, frame application and device driver;
- The frame application is an FDT frame application and the communication proxy is designed to monitor the data transfer between client and server, taking into account the processes in the standard FDT/DTM.

5. A device access device according to any one of claims 1 to 4, **characterized by** at least one of the following:
- the communication proxy is designed to log detected errors;
- the communication proxy includes a cache functionality that stores responses to earlier client requests and makes them available for later client requests;
- The communication proxy is designed to create error statistics that show which components are prone to errors;
- The communication proxy is designed to record response times from the fieldbus network and/or response times from the client, compare them with expected values and use them to derive information for fault diagnosis.

6. A device access device according to any one of claims 1 to 5, **characterized by** at least one of the following:
- the communication proxy is designed not to forward data received from the client to the server if the data integrity is insufficient;
- The communication proxy is designed to prevent data received from the fieldbus network from being forwarded to the client if the data integrity is poor.

7. Device access device according to any one of claims 1 to 6, **characterized in that** the communication proxy is designed to terminate data connections between server and client that are not used for a predetermined period of time.

8. Device access device according to one of claims 1 to 7, **characterized in that** the communication proxy is designed to monitor the data transmission and, depending on the respective error pattern, to initiate at least one of the following:
- Terminating a data connection between client and server,
- Non-forwarding and blocking of incorrect data,
- Correcting a data stream,
- Shutdown of a hardware or software component,
- Restart a component of the fieldbus network,
- Restart the server's frame application,
- Restart of at least one of the communication drivers integrated in the frame application,
- Restart a field access device of the fieldbus network.

9. Device access device according to one of claims 1 to 8, **characterized in that** a component of the fieldbus network, an associated communication channel and an associated device driver are identified with a unique tag that enables the fieldbus component, communication channel and device driver to be assigned to one another.

10. Device access device according to any one of claims 1 to 9, **characterized by** at least one of the following:
- The communication proxy is designed to feed data traffic that the communication proxy receives from a device driver installed on the client side into an associated communication channel according to the tag of the data traffic;
- the communication proxy is designed to forward data traffic that the communication proxy receives via the communication channels provided by the communication drivers to an associated device driver on the client side according to the tag of the data traffic,
and/or **characterized by** at least one of the following:
- the communication proxy is designed to establish at least one data connection between client and server via a computer network;
- the communication proxy is designed to establish the at least one data connection between the client and the server via a computer network, wherein the computer network is at least one of the following: a wireless LAN, an Ethernet connection, an Internet connection;
- The client is a mobile device;
- the client is at least one of the following: a laptop, a tablet, a cell phone, a smartphone, a PDA
and/or **characterized by** at least one of the following:
Driver or user software components can be integrated into the frame application in accordance with one or more of the following standards: DTM, DD, EDD, EDS, FDI Device Packages;
- The frame application is an FDT frame application and driver and user software components of the DTM standard can be integrated into the FDT frame application.

11. A server (200) connectable to a fieldbus network, wherein the server is adapted to maintain a data connection to a client (201, 300) and wherein the server (200) comprises:
- a frame application (203) which is installed on the server (200) and is designed to exchange data with components (209) of the fieldbus network, a tag being used as a unique identifier to identify the respective component (209) of the fieldbus network and an associated communication channel;
- a communication proxy (207) which is installed on the server (200) and is designed to establish at least one data connection between the server (200) and the client (201, 300), wherein data can be transmitted via the at least one data connection between a device driver (206, 310, 312, 315) installed on the client (201, 300) and a component (209) of the fieldbus network assigned to the device driver, wherein the communication proxy (207) is designed to monitor data traffic on the at least one data connection between the client (201, 300) and the server (200) and to detect errors in the data transmission,
**characterized by** at least one of the following:
- the communication proxy is designed to terminate the data connection in the event that a client does not respond to requests or is inactive for at least a predetermined period of time in one of the data connections;
- the communication proxy is designed not to forward the request to the server in the event that the communication proxy receives a request from the client with a tag of an already terminated connection;
- the communication proxy is designed to terminate the data connection in the event that a component of the fieldbus system does not respond to requests or is inactive for at least a predetermined period of time in one of the data connections;
- the communication proxy is designed to restart at least one of the following for troubleshooting: the frame application on the server side, at least one communication driver on the server side, a field access device of the fieldbus network, a component of the fieldbus network;
- the communication proxy is designed so that if the communication proxy receives corrupt data from the server's frame application, the received data is not forwarded to the client;
- the communication proxy is designed so that if the communication proxy receives data from the server's frame application that does not correspond to the current status of the protocol flow in the frame application, the received data is not forwarded to the client;
- the communication proxy is designed to initiate a restart of a respective component in the event that the communication proxy detects that one of the following components has crashed or is only responding with a delay: a component of the fieldbus network, a field access device of the fieldbus network, the frame application on the server, at least one communication driver on the server side, components required by the frame application, such as a database server.

12. An automation technology system which has:
a server (200) according to claim 11;
a client (201, 300), wherein the device driver (206, 310, 312, 315) is installed on the client (201, 300) and wherein an associated component (209) of the fieldbus network can be accessed from the client (201, 300) by means of the device driver (206, 310, 312, 315).

13. A method for monitoring the data traffic between a server (200) and a client (201, 300) of a client-server system, via which components (209) of a fieldbus network can be accessed, wherein a frame application (203) is installed on the server (200), which is designed to exchange data with components (209) of the fieldbus network, wherein a tag is used as a unique identifier to identify the respective component (209) of the fieldbus network and an associated communication channel, wherein a communication proxy (207) is installed on the server (200), which is designed to establish at least one data connection between the server (200) and the client (201, 300), wherein data can be transmitted via the at least one data connection between a device driver (206, 310, 312, 315) installed on the client (201, 300) and a component (209) of the fieldbus network assigned to the device driver, and wherein the method comprises:
Monitoring a data traffic on the at least one data connection between the client (201, 300) and the server (200) by the communication proxy (207) and detecting errors in the data transmission,
**characterized by** at least one of the following:
- In the event that a client in one of the data connections does not respond to requests or is inactive for at least a predetermined period of time, the communication proxy terminates the data connection;
- in the event that the communication proxy receives a request from the client with a tag of a connection that has already ended, the communication proxy does not forward the request to the server;
- In the event that a component of the fieldbus system does not respond to requests or is inactive for at least a predetermined period of time in one of the data connections, the communication proxy terminates the data connection;
- the communication proxy restarts at least one of the following for troubleshooting: the frame application on the server side, at least one communication driver on the server side, a field access device of the fieldbus network, a component of the fieldbus network;
- In the event that the communication proxy receives corrupt data from the server's frame application, the communication proxy does not forward the received data to the client;
- In the event that the communication proxy receives data from the server's frame application that does not correspond to the current status of the protocol flow in the frame application, the communication proxy does not forward the received data to the client;
- the communication proxy initiates a restart of a respective component in the event that the communication proxy detects that one of the following components has crashed or is only responding with a delay: a component of the fieldbus network, a field access device of the fieldbus network, the frame application on the server, at least one communication driver on the server side, components required by the frame application, such as a database server.

14. Method according to claim 13, **characterized by** at least one of the following steps:
- Synchronization of data traffic with a predefined set of rules by the communication proxy;
- In the event of errors, the communication proxy initiates measures to rectify the error.

## Revendications

1. Un dispositif d'accès au dispositif pour un système client-serveur comprenant un serveur (200) et un client (201, 300), dans lequel le dispositif d'accès au dispositif permet d'accéder à des composants (209) d'un réseau de bus de terrain et dans lequel le dispositif d'accès au dispositif comprend :
- une application cadre (203) qui installée sur le serveur (200) et qui est conçue pour échanger des données avec des composants (209) du réseau de bus de terrain, une étiquette étant utilisée comme identificateur unique pour caractériser le composant respectif (209) du réseau de bus de terrain ainsi qu'un canal de communication associé
- un pilote de périphérique (206, 310, 312, 315) sur le client (201, 300),
- un proxy de communication (207) qui installé sur le serveur (200) et qui est conçu pour établir au moins une liaison de données entre le serveur (200) et le client (201, 300), des données étant transmises par l'intermédiaire de la au moins une liaison de données entre le pilote d'appareil (206, 310, 312, 315) et un composant (209) du réseau de bus de terrain associé au pilote d'appareil, le proxy de communication (207) étant conçu pour surveiller un trafic de données sur l'au moins une liaison de données entre le client (201, 300) et le serveur (200) et pour détecter des erreurs dans la transmission de données,
**caractérisé par** au moins un des éléments suivants :
- le proxy de communication est conçu, dans le cas où, dans l'une des connexions de données, un client ne répond pas aux demandes ou est inactif pendant au moins une période de temps prédéterminée, pour mettre fin à la connexion de données ;
- le proxy de communication est conçu pour, dans le cas où le proxy de communication reçoit du client une demande contenant une balise d'une connexion déjà terminée, ne pas transmettre la demande au serveur ;
- le proxy de communication est conçu, dans le cas où, dans l'une des connexions de données, un composant du système de bus de terrain ne répond pas aux demandes ou est inactif pendant au moins une période de temps prédéterminée, pour mettre fin à la connexion de données ;
- le proxy de communication est conçu pour redémarrer au moins l'un des éléments suivants pour corriger l'erreur : l'application cadre du côté du serveur, au moins un pilote de communication du côté du serveur, un dispositif d'accès de terrain du réseau de bus de terrain, un composant du réseau de bus de terrain ;
- le proxy de communication est conçu pour que, dans le cas où le proxy de communication reçoit des données corrompues de l'application cadre du serveur, les données reçues ne soient pas transmises au client ;
- le proxy de communication est conçu pour, dans le cas où le proxy de communication reçoit de l'application cadre du serveur des données qui ne correspondent pas à l'état actuel du déroulement du protocole dans l'application cadre, ne pas retransmettre les données reçues au client ;
- le proxy de communication est conçu pour provoquer un redémarrage d'un composant respectif dans le cas où le proxy de communication détecte que l'un des composants suivants est tombé en panne ou ne réagit qu'avec retard : un composant du réseau de bus de terrain, un dispositif d'accès de terrain du réseau de bus de terrain, l'application de trame sur le serveur, au moins un pilote de communication du côté du serveur, des composants requis par l'application de trame, comme par exemple un serveur de base de données.

2. Dispositif d'accès à un appareil selon la revendication 1, **caractérisé en ce que** le proxy de communication est conçu pour comparer la transmission de données entre le client et le serveur à un ensemble de règles prédéfinies afin de détecter les erreurs.

3. Dispositif d'accès à un appareil selon la revendication 1 ou la revendication 2, **caractérisé par** au moins un des éléments suivants :
- le proxy de communication est conçu pour déclencher automatiquement des mesures de correction en cas d'erreurs détectées ;
- le proxy de communication est conçu pour déclencher automatiquement, en cas d'erreurs détectées et en fonction du type d'erreur, des mesures visant à remédier à l'erreur.

4. Dispositif d'accès à un appareil selon l'une quelconque des revendications 1 à 3, **caractérisé par** au moins un des éléments suivants :
- le proxy de communication est conçu pour surveiller le transfert de données entre le client et le serveur en tenant compte des processus de communication entre le réseau de bus de terrain, l'application cadre et le pilote de l'appareil ;
- l'application-cadre est une application-cadre FDT et le proxy de communication est conçu pour surveiller le transfert de données entre le client et le serveur en tenant compte des processus dans le FDT/DTM standard.

5. Dispositif d'accès à un appareil selon l'une quelconque des revendications 1 à 4, **caractérisé par** au moins un des éléments suivants :
- le proxy de communication est conçu pour consigner les erreurs détectées ;
- le proxy de communication comprend une fonctionnalité de cache qui stocke les réponses aux demandes antérieures du client et les met à disposition lors des demandes ultérieures du client ;
- le proxy de communication est conçu pour établir des statistiques sur les erreurs, qui indiquent les composants où les erreurs sont fréquentes ;
- le proxy de communication est conçu pour enregistrer les temps de réponse de la part du réseau de bus de terrain et/ou les temps de réponse de la part du client, les comparer à des valeurs attendues et en déduire des informations pour le diagnostic d'erreurs.

6. Dispositif d'accès à un appareil selon l'une quelconque des revendications 1 à 5, **caractérisé par** au moins un des éléments suivants :
- le proxy de communication est conçu pour ne pas transmettre au serveur les données reçues du client en cas de manque d'intégrité des données ;
- le proxy de communication est conçu pour ne pas transmettre au client les données reçues du réseau de bus de terrain en cas de manque d'intégrité des données.

7. Dispositif d'accès à un appareil selon l'une quelconque des revendications 1 à 6, **caractérisé en ce que** le proxy de communication est adapté pour mettre fin aux connexions de données entre le serveur et le client qui ne sont pas utilisées pendant une période de temps prédéterminée.

8. Dispositif d'accès à un appareil selon l'une quelconque des revendications 1 à 7, **caractérisé en ce que** le proxy de communication est conçu pour surveiller la transmission de données et pour déclencher au moins l'une des opérations suivantes en fonction de l'image d'erreur respective :
- Mettre fin à une connexion de données entre le client et le serveur,
- Ne pas transmettre et bloquer les données erronées,
- Corriger un flux de données,
- Arrêt d'un composant matériel ou logiciel,
- Redémarrage d'un composant du réseau de bus de terrain,
- Redémarrage de l'application cadre du serveur,
- Redémarrage d'au moins un des drivers de communication intégrés dans l'application cadre,
- Redémarrage d'un dispositif d'accès au terrain du réseau de bus de terrain.

9. Dispositif d'accès à un appareil selon l'une quelconque des revendications 1 à 8, **caractérisé en ce qu'**un composant du réseau de bus de terrain, un canal de communication associé et un pilote d'appareil associé sont identifiés par une étiquette unique qui permet d'associer le composant de bus de terrain, le canal de communication et le pilote d'appareil les uns aux autres.

10. Dispositif d'accès à un appareil selon l'une quelconque des revendications 1 à 9, **caractérisé par** au moins un des éléments suivants :
- le proxy de communication est conçu pour injecter un trafic de données que le proxy de communication reçoit d'un pilote de dispositif installé du côté du client dans un canal de communication associé en fonction du tag du trafic de données ;
- le proxy de communication est conçu pour acheminer le trafic de données reçu par le proxy de communication via les canaux de communication fournis par les pilotes de communication vers un pilote de périphérique associé du côté du client, en fonction du tag du trafic de données,
et/ou **caractérisé par** au moins un des éléments suivants :
- le proxy de communication est conçu pour établir ladite au moins une connexion de données entre le client et le serveur via un réseau informatique ;
- le proxy de communication est conçu pour établir la au moins une connexion de données entre le client et le serveur via un réseau informatique, le réseau informatique étant au moins l'un des suivants : un réseau local sans fil, une connexion Ethernet, une connexion Internet ;
- le client est un terminal mobile ;
- le client est au moins l'un des suivants : un ordinateur portable, une tablette, un téléphone mobile, un smartphone, un PDA
et/ou **caractérisé par** au moins un des éléments suivants :
des composants de pilotes ou de logiciels utiles correspondant à un ou plusieurs des standards suivants peuvent être intégrés dans l'application cadre : DTM, DD, EDD, EDS, FDI Device Packages ;
- l'application-cadre est une application-cadre FDT et des composants logiciels pilotes et utiles du standard DTM peuvent être intégrés dans l'application-cadre FDT.

11. Serveur (200) pouvant être connecté à un réseau de bus de terrain, le serveur étant adapté pour maintenir une connexion de données avec un client (201, 300), le serveur (200) comprenant :
- une application cadre (203) installée sur le serveur (200) et conçue pour échanger des données avec des composants (209) du réseau de bus de terrainune étiquette étant utilisée comme identificateur unique pour caractériser le composant respectif (209) du réseau de bus de terrain ainsi qu'un canal de communication associé ;
- un proxy de communication (207) qui est installé sur le serveur (200) et qui est conçu pour établir au moins une liaison de données entre le serveur (200) et le client (201, 300), des données étant transmises par l'intermédiaire de la au moins une liaison de données entre un pilote d'appareil (206, 310, 312, 315) et un composant (209) du réseau de bus de terrain associé au pilote d'appareil peuvent être transmis, le proxy de communication (207) étant conçu pour surveiller un trafic de données sur l'au moins une liaison de données entre le client (201, 300) et le serveur (200) et pour détecter des erreurs dans la transmission de données,
**caractérisé par** au moins un des éléments suivants :
- le proxy de communication est conçu, dans le cas où, dans l'une des connexions de données, un client ne répond pas aux demandes ou est inactif pendant au moins une période de temps prédéterminée, pour mettre fin à la connexion de données ;
- le proxy de communication est conçu pour, dans le cas où le proxy de communication reçoit du client une demande contenant une balise d'une connexion déjà terminée, ne pas transmettre la demande au serveur ;
- le proxy de communication est conçu, dans le cas où, dans l'une des connexions de données, un composant du système de bus de terrain ne répond pas aux demandes ou est inactif pendant au moins une période de temps prédéterminée, pour mettre fin à la connexion de données ;
- le proxy de communication est conçu pour redémarrer au moins l'un des éléments suivants pour corriger l'erreur : l'application cadre du côté du serveur, au moins un pilote de communication du côté du serveur, un dispositif d'accès de terrain du réseau de bus de terrain, un composant du réseau de bus de terrain ;
- le proxy de communication est conçu pour que, dans le cas où le proxy de communication reçoit des données corrompues de l'application cadre du serveur, les données reçues ne soient pas transmises au client ;
- le proxy de communication est conçu pour, dans le cas où le proxy de communication reçoit de l'application cadre du serveur des données qui ne correspondent pas à l'état actuel du déroulement du protocole dans l'application cadre, ne pas transmettre les données reçues au client ;
- le proxy de communication est conçu pour provoquer un redémarrage d'un composant respectif dans le cas où le proxy de communication détecte que l'un des composants suivants est tombé en panne ou ne réagit qu'avec retard : un composant du réseau de bus de terrain, un dispositif d'accès de terrain du réseau de bus de terrain, l'application de trame sur le serveur, au moins un pilote de communication du côté du serveur, des composants requis par l'application de trame, comme par exemple un serveur de base de données.

12. Un système de technique d'automatisation qui comprend
un serveur (200) selon la revendication 11 ;
un client (201, 300), le pilote d'appareil (206, 310, 312, 315) étant installé sur le client (201, 300) et un composant (209) associé du réseau de bus de terrain pouvant être accédé à partir du client (201, 300) au moyen du pilote d'appareil (206, 310, 312, 315).

13. Procédé de surveillance du trafic de données entre un serveur (200) et un client (201, 300) d'un système client-serveur, par lequel on peut accéder à des composants (209) d'un réseau de bus de terrain, une application cadre (203) étant installée sur le serveur (200), laquelle est conçue pour échanger des données avec des composants (209) du réseau de bus de terrain, une étiquette étant utilisée comme identificateur unique pour caractériser le composant respectif (209) du réseau de bus de terrain ainsi qu'un canal de communication associé, un proxy de communication (207) étant installé sur le serveur (200), lequel est conçu pour établir au moins une liaison de données entre le serveur (200) et le client (201, 300), des données pouvant être transmises par l'intermédiaire de la au moins une liaison de données entre un pilote d'appareil (206, 310, 312, 315) installé sur le client (201, 300) et un composant (209) du réseau de bus de terrain associé au pilote d'appareil, et le procédé comprenant :
surveiller un trafic de données sur la au moins une liaison de données entre le client (201, 300) et le serveur (200) par le proxy de communication (207) et détecter des erreurs dans la transmission de données,
**caractérisé par** au moins l'un des éléments suivants :
- dans le cas où, dans l'une des connexions de données, un client ne répond pas à des demandes ou est inactif pendant au moins une période de temps prédéterminée, le proxy de communication met fin à la connexion de données ;
- dans le cas où le proxy de communication reçoit du client une demande avec une balise d'une connexion déjà terminée, le proxy de communication ne transmet pas la demande au serveur ;
- dans le cas où, dans l'une des liaisons de données, un composant du système de bus de terrain ne répond pas à des demandes ou est inactif pendant au moins une période de temps prédéterminée, le proxy de communication met fin à la liaison de données ;
- le proxy de communication redémarre au moins l'un des éléments suivants pour corriger l'erreur : l'application cadre du côté du serveur, au moins un pilote de communication du côté du serveur, un dispositif d'accès au terrain du réseau de bus de terrain, un composant du réseau de bus de terrain ;
- dans le cas où le proxy de communication reçoit des données corrompues de l'application cadre du serveur, le proxy de communication ne transmet pas les données reçues au client ;
- dans le cas où le proxy de communication reçoit de l'application cadre du serveur des données qui ne correspondent pas à l'état actuel du déroulement du protocole dans l'application cadre, le proxy de communication ne transmet pas les données reçues au client ;
- le proxy de communication provoque un redémarrage d'un composant respectif dans le cas où le proxy de communication détecte que l'un des composants suivants est tombé en panne ou ne réagit qu'avec retard : un composant du réseau de bus de terrain, un appareil d'accès de terrain du réseau de bus de terrain, l'application cadre sur le serveur, au moins un pilote de communication du côté du serveur, des composants requis par l'application cadre comme par exemple un serveur de base de données.

14. Procédé selon la revendication 13, **caractérisé par** au moins une des étapes suivantes :
- Comparaison du trafic de données avec un ensemble de règles prédéfinies par le proxy de communication ;
- en présence d'erreurs, faire prendre des mesures de correction par le proxy de communication.
